(19)

Europäisches
Patentamt
European
Patent Office
Office européen
des brevets

(11) **EP 4 432 406 A2**

(12) # EUROPEAN PATENT APPLICATION

(43) Date of publication:
**18.09.2024 Bulletin 2024/38**

(21) Application number: **24153379.3**

(22) Date of filing: **23.01.2024**

(51) International Patent Classification (IPC):
*H01M 8/0438* (2016.01)    *H01M 8/04089* (2016.01)
*H01M 8/04082* (2016.01)    *H01M 8/0444* (2016.01)
*H01M 8/04537* (2016.01)    *H01M 8/04746* (2016.01)
*H01M 8/04858* (2016.01)

(52) Cooperative Patent Classification (CPC):
**H01M 8/04097; H01M 8/04201; H01M 8/04388;
H01M 8/04447; H01M 8/04589; H01M 8/04753;
H01M 8/04761; H01M 8/0491**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.03.2023 JP 2023040015**

(71) Applicant: **Toshiba Energy Systems & Solutions
Corporation
Saiwai-ku
Kawasaki-shi
Kanagawa (JP)**

(72) Inventor: **YAMASHITA, Kyohei
Kawasaki-shi, Kanagawa (JP)**

(74) Representative: **Hoffmann Eitle
Patent- und Rechtsanwälte PartmbB
Arabellastraße 30
81925 München (DE)**

(54) **FUEL CELL SYSTEM**

(57)    A fuel cell system according to an embodiment includes: a fuel cell that is supplied with a fuel gas to generate electric power; a determination unit that determines a mixing ratio of inert gas in the fuel gas to be supplied to the fuel cell; and an operation control unit that changes an operation condition of the fuel cell system, based on the mixing ratio of inert gas determined by the determination unit.

FIG. 1

EP 4 432 406 A2

**Description**

FIELD

This embodiment relates to a fuel cell system.

BACKGROUND

A fuel cell system comprises a fuel cell with an electrolyte membrane interposed between a fuel electrode and an oxidant electrode. In the fuel cell, a fuel gas supplied to the fuel electrode and an oxidant gas supplied to the oxidant electrode react electrochemically through the electrolyte membrane. Thus, the fuel cell is a power generation device that converts chemical energy into electric energy. The fuel gas is, for example, a hydrogen gas, and the oxidant gas is, for example, air.

A fuel tank that stores a fuel gas to be supplied to the fuel electrode is connected to the fuel cell system. During normal operation, the fuel gas is supplied from the fuel tank to the fuel electrode, and the fuel cell generates electric power. The fuel tank stores a high-pressure hydrogen gas or liquid hydrogen.

When the fuel tank is replenished with fuel, a separate replenishment tank is connected to the fuel tank through a replenishment channel such as a pipe. The replenishment channel is purged with an inert gas such as a nitrogen gas or a helium gas, and then the fuel in a gaseous state or a liquid state is supplied from the replenishment tank to the fuel tank.

The fuel thus stored in the fuel tank may contain the inert gas. If the fuel gas containing the inert gas is supplied to the fuel electrode, the inert gas tends to accumulate inside the fuel electrode in the fuel cell system. In addition, during the normal operation of the fuel cell, the inert gas contained in the oxidant electrode may move to the fuel electrode through the electrolyte membrane inside the fuel cell.

If the inert gas accumulates inside the fuel electrode in this way, a fuel gas concentration in the fuel electrode may decrease. This may impair a fuel cell performance, resulting in suspension of operation of the fuel cell.

The fuel cell system is sometimes equipped with a fuel-gas circulation channel that returns the fuel gas discharged from the fuel cell to the fuel cell. In this case, a degassing line including a degassing valve is connected to the fuel-gas circulation channel. Such a fuel cell system allows the inert gas in the fuel electrode to be released from the degassing value, so as to recover the fuel gas concentration. However, if the inert gas, an amount of which exceeds an amount of inert gas that can be released by a normal degassing operation, is supplied to the fuel electrode, a concentration of the inert gas in the fuel electrode may increase. This may impair a fuel cell performance, resulting in suspension of operation of the fuel cell.

BRIEF DESCRIPTION OF THE DRAWINGS

Fig. 1 is a view showing a fuel cell system according to a first embodiment.
Fig. 2 is a view for describing opening and closing time intervals of a degassing valve shown in Fig. 1.
Fig. 3 is a view showing a fuel cell system according to a second embodiment.
Fig. 4 is a view for describing a modification example of opening and closing time intervals of a degassing valve shown in Fig. 3.
Fig. 5 is a view showing a fuel cell system according to a third embodiment.

DETAILED DESCRIPTION

A fuel cell system according to an embodiment comprises: a fuel cell that is supplied with a fuel gas to generate electric power; a determination unit that determines a mixing ratio of inert gas in the fuel gas to be supplied to the fuel cell; and an operation control unit that changes an operation condition of the fuel cell system, based on the mixing ratio of inert gas determined by the determination unit.

A fuel cell system according to an embodiment comprises: a fuel cell that is supplied with a fuel gas to generate electric power; a fuel-gas circulation channel that returns the fuel gas discharged from the fuel cell to the fuel cell; a third pressure gauge that measures a pressure value of the fuel gas in the fuel-gas circulation channel; a degassing channel that discharges outside the fuel gas from the fuel-gas circulation channel; a degassing valve provided on the degassing channel; and an operation control unit that changes an operation condition of the fuel cell system, based on the pressure value measured by the third pressure gauge.

A fuel cell system according to an embodiment comprises: a fuel cell that is supplied with a fuel gas to generate electric power; and an operation control unit that changes an operation condition of the fuel cell system, based on information stored in a superordinate control system of the fuel cell system.

The embodiments are described below with reference to the drawings.

(First Embodiment)

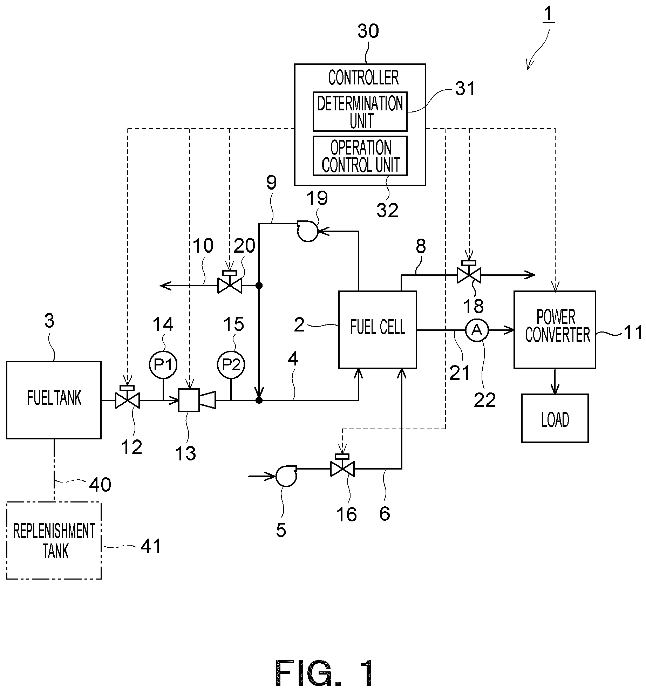

A fuel cell system 1 according to a first embodiment is described first using Fig. 1. The fuel cell system 1 according to this embodiment may be installed in a building or mounted on a mobile body. Examples of buildings include condominiums, office buildings, factories, commercial facilities, etc. In this case, electric power generated by the fuel cell system 1 may be used to drive elevators, to light and/or air condition the inside of the building. Examples of mobile bodies include ships, automobiles, railcars, etc. In this case, electric power generated by the fuel cell system 1 may be used to drive the mobile body, to light and/or air condition the inside of the mobile body.

As shown in Fig. 1, the fuel cell system 1 comprises a fuel cell 2, a fuel tank 3, a fuel-gas supply channel 4, an oxidant-gas supply unit 5, an oxidant-gas supply channel 6, an oxidant-gas discharge channel 8, a fuel-gas circulation channel 9, a degassing channel 10, a power converter 11, and a controller 30.

The fuel cell 2 is configured to be capable of generating electric power. The fuel cell 2 is a power generation device that generates electric power by using a fuel gas supplied from the fuel tank 3 and an oxidant gas supplied from the oxidant-gas supply unit 5. The fuel gas may be a hydrogen gas, or a mixed gas containing a hydrogen gas, etc. The oxidant gas may be air, etc. More specifically, the fuel cell 2 includes, although not shown, a fuel electrode (anode), an oxidant electrode (cathode), and an electrolyte membrane interposed between the fuel electrode and the oxidant electrode. The fuel gas supplied to the fuel electrode and the oxidant gas supplied to the oxidant electrode react electrochemically through the electrolyte membrane. Thus, chemical energy is converted into electric energy, so that the fuel cell 2 can generate electric power.

The fuel tank 3 is an example of a fuel supply unit. The fuel tank 3 is configured to store the fuel gas to be supplied to the fuel electrode. The fuel tank 3 stores a high-pressure hydrogen gas or liquid hydrogen.

The fuel-gas supply channel 4 supplies the fuel gas stored in the fuel tank 3 to the fuel electrode of the fuel cell 2. The fuel-gas supply channel 4 may be provided with a fuel-gas supply valve 12, a flow-rate regulation valve 13, a first pressure gauge 14, and a second pressure gauge 15. The fuel-gas supply valve 12 is a valve that controls supply of the fuel gas from the fuel tank 3 to the fuel electrode. The fuel-gas supply valve 12 is opened upon operation of the fuel cell system 1 to supply the fuel gas to the fuel electrode. The fuel-gas supply valve 12 may be controlled by the controller 30.

The flow-rate regulation valve 13 is a valve that regulates a supply flow rate of the fuel gas to the fuel electrode of the fuel cell 2. An opening degree of the flow-rate regulation valve 13 is regulated based on a command of the controller 30. Opening degree values commanded by the controller 30 are stored in the controller 30. The flow-rate regulation valve 13 may be provided downstream of the fuel-gas supply valve 12. The flow-rate regulation valve 13 may be an injector, a proportional solenoid valve or a proportional electric valve whose opening degree can be controlled.

The first pressure gauge 14 is configured to measure a pressure value P1 of the fuel gas flowing into the flow-rate regulation valve 13 in the fuel-gas supply channel 4. The pressure value P1 corresponds to an inlet pressure value of the flow-rate regulation valve 13. The first pressure gauge 14 is provided upstream of the flow-rate regulation valve 13 in the fuel-gas supply channel 4. The first pressure gauge 14 may be provided between the fuel-gas supply valve 12 and the flow-rate regulation valve 13. The pressure value P1 measured by the first pressure gauge 14 is transmitted to the controller 30.

The second pressure gauge 15 is configured to measure a pressure value P2 of the fuel gas flowing out from the flow-rate regulation valve 13 in the fuel-gas supply channel 4. The pressure value P2 corresponds to an outlet pressure value of the flow-rate regulation valve 13. The second pressure gauge 15 is provided downstream of the flow-rate regulation valve 13 in the fuel-gas supply channel 4. The second pressure gauge 15 may be provided between the flow-rate regulation valve 13 and the fuel cell 2. The pressure value P2 measured by the second pressure gauge 15 is transmitted to the controller 30.

The oxidant-gas supply unit 5 is configured to supply the oxidant gas to the oxidant electrode. The oxidant-gas supply unit 5 may be, for example, a blower or a compressor.

The oxidant-gas supply channel 6 supplies the oxidant gas from the oxidant-gas supply unit 5 to the oxidant electrode of the fuel cell 2. The oxidant-gas supply unit 6 may be provided with an oxidant gas supply valve 16. The oxidant gas supply valve 16 is a valve that controls supply of the oxidant gas from the oxidant-gas supply unit 5 to the oxidant electrode. The oxidant gas supply valve 16 is opened upon operation of the fuel cell system 1 to supply the oxidant gas to the oxidant electrode. The oxidant gas supply valve 16 may be controlled by the controller 30.

The oxidant-gas discharge channel 8 discharges outside the oxidant gas discharged from the oxidant electrode of the fuel cell 2. The oxidant-gas discharge channel 8 may be provided with an oxidant-gas discharge valve 18. The oxidant-gas discharge valve 18 is a valve that controls discharge of the oxidant gas from the oxidant electrode to the outside. The oxidant-gas discharge valve 18 is opened upon operation of the fuel cell system 1 to discharge the oxidant gas from the oxidant electrode. The oxidant-gas discharge valve 18 may be controlled by the controller 30.

The fuel-gas circulation channel 9 is configured to return the fuel gas discharged from the fuel electrode of the fuel cell 2 to the fuel cell 2. An upstream end of the fuel-gas circulation channel 9 may be connected to the aforementioned fuel electrode of the fuel cell 2, and a downstream end of the fuel-gas circulation channel 9 may be connected to the aforementioned fuel-gas supply channel 4. In this case, the fuel gas discharged from the fuel electrode can be supplied to the fuel-gas supply channel 4 to recycle the fuel gas. The fuel-gas circulation channel 9 may be provided with a circulation blower 19. The circulation blower 19 draws the fuel gas from the fuel electrode and feeds the fuel gas to the fuel-gas supply channel 4.

The degassing channel 10 is configured to discharge outside the fuel gas from the fuel-gas circulation channel 9. The degassing channel 10 may be provided with a degassing valve 20.

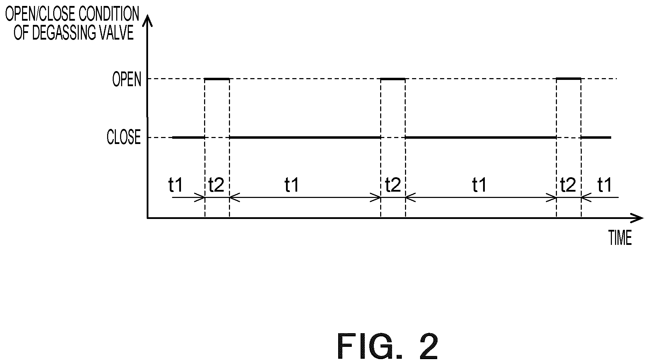

The degassing valve 20 is a valve that is provided on the fuel-gas circulation channel 9 to control discharge of the fuel gas from the fuel-gas circulation channel 9 to the outside. As shown in Fig. 2, in the degassing valve 20, a closed state which is maintained at a predetermined time interval t1, and an open state which is maintained at a predetermined time interval t2 may be alternated.

As shown in Fig. 1, the power converter 11 is a device for converting an electric voltage and an electric current of the electric power generated by the fuel cell 2. The electric power converted by the power converter 11 is supplied to an external load. The power converter 11 may be a DC/DC converter or an inverter. The power converter 11 is connected to the fuel cell 2 through an output line 21. The output line 21 is provided with an ammeter 22. The ammeter 22 is configured to measure an electric current value of the generated electric power outputted from the fuel cell 2.

The controller 30 may include a determination unit 31 and an operation control unit 32. The controller 30 is configured to control the aforementioned fuel-gas supply valve 12, the flow-rate regulation valve 13, the oxidant gas supply valve 16, the oxidant-gas discharge valve 18, the degassing valve 20, and the power generator 11.

The determination unit 31 is configured to determine a mixing ratio of inert gas in the fuel gas to be supplied to the fuel cell 2. The determination unit 31 according to this embodiment determines the mixing ratio of inert gas based on a fuel gas supply amount to the fuel cell 2, and a fuel gas consumption amount in the fuel cell 2.

More specifically, the determination unit 31 calculates a fuel gas supply amount which is an amount of the fuel gas supplied to the fuel electrode, and a fuel gas consumption amount which is an amount of the fuel gas consumed in the fuel cell 2. The fuel gas supply amount is calculated based on the pressure value P1 measured by the first pressure gauge 14, the pressure value P2 measured by the second pressure gauge 15, and the opening degree θ of the flow-rate regulation valve 13. The fuel gas supply amount $Q_{in}$ may be calculated by the following equation (1):

$$Q_{in} = 2916 \times C_v \sqrt{\frac{(P_1 - P_2) \times (P_1 + P_2)}{G \times (T + 273.15)}} \times \frac{1000}{60} \times \frac{243.15}{(273.15 + 15.6)} \times \theta \qquad (1)$$

wherein G represents a specific gravity of the fuel gas, T represents a temperature of the fuel gas, and $C_v$ represents a capacity factor of the flow-rate regulation valve 13.

The fuel gas consumption amount is calculated based on an electric current value measured by the ammeter 22. The fuel gas consumption amount is proportional to an electric current value of the generated electric power. The fuel gas consumption amount $Q_{co}$ may be calculated by the following equation (2):

$$Q_{co} = \frac{I \times N}{2 \times F} \times 60 \times 22.4 \qquad (2)$$

wherein I represents a generated electric current of the fuel cell 2, N represents the number of cells in a cell stack of the fuel cell 2, and F represents the Faraday number.

The determination unit 31 calculates a difference between the fuel gas supply amount and the fuel gas consumption amount that are calculated as above. When the difference is greater than a predetermined threshold value, it may be determined that the mixing ratio of inert gas has increased.

As the mixing ratio of inert gas in the fuel gas increases, the fuel gas supply amount may increase. More specifically, a molecular weight of the inert gas, such as a nitrogen gas or a helium gas, is greater than a molecular weight of a hydrogen gas. Thus, as the mixing ratio of inert gas in the fuel gas increases, the specific gravity of the fuel gas increases. In this case, pressure loss of the fuel gas increases, so that the flow rate of the fuel gas passing through the flow-rate regulation valve 13 decreases whereby the pressure value P1 decreases. When the controller 30 detects the decrease in pressure value P1, it increases the opening degree of the flow rate regulation value 13 in order to increase the flow rate of the fuel gas. As a result, the fuel gas supply amount $Q_{in}$ shown in the equation (1) increases.

In this way, the difference between the fuel gas supply amount and the fuel gas consumption amount increases.

The mixing ratio of inert gas in the fuel gas can be determined based on the difference. The operation condition of the fuel cell system 1 is changed based on the determination by the determination unit 31, in order to continue the operation of the fuel cell system 1.

The operation control unit 32 changes the operation condition of the fuel cell system 1 based on the mixing ratio of inert gas determined by the determination unit 31. For example, the operation control unit 32 may regulate an upper limit value of a generated electric current of the fuel cell 2 and may regulate a fuel supply amount, based on the mixing ratio of inert gas. The operation control unit 32 may control the aforementioned power converter 11 such that the upper limit value of the generated electric current of the fuel cell 2 is decreased, when the mixing ratio of inert gas increases. In addition, the operation control unit 32 may control the flow-rate regulation valve 13 such that the fuel gas supply amount is decreased, when the mixing ratio of inert gas increases.

Next, an operation method of the fuel cell system 1 according to the embodiment as structured above is described.

Prior to staring operation of the fuel cell system 1, the fuel tank 3 is replenished with fuel. For example, as shown in Fig. 1, one end of a replenishment channel 40, such as a pipe, is first connected to the fuel tank 3. The replenishment channel 40 is then purged with the inert gas such as a nitrogen gas. Thereafter, a replenishment tank 41 is connected to the other end of the replenishment channel 40 so that the fuel tank 3 is replenished with the fuel from the replenishment tank 41. The inert gas may remain in the fuel supplied to the fuel tank 3. The fuel replenished to the fuel tank 3 from the replenishment tank 41 may be either the fuel in a liquid state or the fuel in a gaseous state. After completion of the replenishment of fuel, the replenishment channel 40 and the replenishment tank 41 are detached from the fuel tank 3.

After the replenishment of fuel has been completed, the fuel cell system 1 begins operation.

The fuel-gas supply valve 12 and the oxidant gas supply valve 16 are opened first, and the oxidant-gas supply unit 5 and the circulation blower 19 are driven. Thus, the fuel gas is supplied form the fuel tank 3 to the fuel electrode of the fuel cell 2, and the oxidant gas is supplied from the oxidant-gas supply unit 5 to the oxidant electrode of the fuel cell 2. A supply flow rate of the oxidant gas is regulated by the oxidant-gas supply unit 5 based on a command of the controller 30. The fuel gas having been supplied to the fuel electrode and the oxidant gas having been supplied to the oxidant electrode react electrochemically through the electrolyte membrane. This converts the chemical energy into the electric energy, so that the fuel cell 2 generates electric power. The generated electric power is outputted from the fuel cell 2 and an electric voltage and an electric current are converted in the power converter 11. The generated electric power is supplied to the load from the power converter 11.

The fuel gas having passed through the fuel electrode is drawn into the fuel-gas circulation channel 9. Since the oxidant-gas discharge valve 18 is open, the oxidant gas having passed through the oxidant electrode is discharged outside from the oxidant-gas discharge channel 8.

The fuel gas having flown into the fuel-gas circulation channel 9 is fed to the fuel-gas supply channel 4 by the circulation blower 19 and is again supplied to the fuel electrode. In this manner, the fuel gas is circulated to be recycled during the operation of the fuel cell system 1.

During the operation of the fuel cell system 1, the determination unit 31 of the controller 30 determines a mixing ratio of inert gas in the fuel gas, and a power control unit 24 changes an operation condition of the fuel cell system 1 based on the determined mixing ratio.

More specifically, the first pressure gauge 14 and the second pressure gauge 15 measure pressure values P1 and P2 of the fuel gas in the fuel-gas supply channel 4, and the measured pressure values are transmitted to the controller 30. The ammeter 22 measures an electric current value of the generated electric power outputted from the fuel cell 2, and the measured electric current value is transmitted to the controller 30. The determination unit 31 of the controller 30 calculates a fuel gas supply amount based on the pressure value P1 measured by the first pressure gauge 14, the pressure value P2 measured by the second pressure gauge 15, and a stored opening degree of the flow-rate regulation valve 13. In addition, the determination unit 31 calculates a fuel gas consumption amount based on the electric current value measured by the ammeter 22. When a difference between the fuel gas supply amount and the fuel gas consumption amount is greater than a predetermined threshold value, it is determined that a mixing ratio of inert gas in the fuel gas is large.

When the determination unit 31 determines that the mixing ratio of inert gas is large, the operation control unit 32 decreases an upper limit value of the generated electric current of the fuel cell 2, and decreases the fuel gas supply amount. For example, the operation control unit 32 controls the power converter 11 to decrease the upper limit value of the generated electric current, and controls the flow-rate regulation valve 13 to decrease the fuel gas supply amount. This decreases a supply flow rate of the fuel gas to be supplied to the fuel electrode of the fuel cell system 1, to thereby decrease an accumulation rate of inert gas to be accumulated in the fuel electrode and to prevent performance degradation of the fuel cell.

Thereafter, when the mixing ratio of inert gas in the fuel gas decreases, the determination unit 31 may determine that the mixing ratio of inert gas is not large. More specifically, when the aforementioned difference between the fuel gas supply amount and the fuel gas consumption amount is equal to or less than a predetermined threshold value, it may be determined that the mixing ratio of inert gas in the fuel gas is not large. In this case, the operation control unit may restore the upper limit value of the generated electric current of the fuel cell 2 and the fuel gas supply amount.

Namely, according to this embodiment, the operation condition of the fuel cell system 1 is changed based on the mixing ratio of inert gas in the fuel gas to be supplied to the fuel cell 2. Thus, even when the mixing ratio of inert gas in the fuel gas is large, the fuel cell system can be suitably operated based thereon. This allows the operation to be continued even when the fuel gas contains the inert gas.

In addition, according to this embodiment, the determination unit 31 determines the mixing ratio of inert gas based on the fuel gas supply amount to the fuel cell 2 and the fuel gas consumption amount in the fuel cell 2. This allows the determination unit 31 to exactly determine the mixing ratio of inert gas in the fuel gas.

In addition, according to this embodiment, the determination unit 31 can calculate the fuel gas supply amount based on the pressure value P1 measured by the first pressure gauge 14, the pressure value P2 measured by the second pressure gauge 15, and the opening degree of the flow-rate regulation valve 13. The determination unit 31 can calculate the fuel gas consumption amount based on the generated electric current value measured by the ammeter 22. The mixing ratio of inert gas can be determined based on the calculated fuel gas supply amount and the calculated fuel gas consumption amount. This can improve determination accuracy of the mixing ratio of inert gas.

In addition, according to this embodiment, the operation control unit 32 regulates the upper limit value of the generated electric current of the fuel cell 2 and regulates the fuel gas supply amount, based on the mixing ratio of inert gas determined by the determination unit 31. Thus, when the mixing ratio of inert gas increases, the upper limit value of the generated electric current of the fuel cell 2 can be decreased, and the fuel gas supply amount can be decreased. This decreases an accumulation rate of inert gas to be accumulated in the fuel electrode, to thereby prevent performance degradation of the fuel cell. This allows the operation to be continued even when the fuel gas contains the inert gas.

When the fuel gas contains the inert gas, the specific gravity of the fuel gas increases, which may increase pressure loss of the fuel gas. In this case, a regulatable range of the fuel gas by the fuel rate regulation valve 13 may be decreased, and a regulatable maximum flow rate value may be decreased. In contrast, according to this embodiment, the operation control unit 32 decreases the upper limit value of the generated electric current of the fuel cell 2 and decreases the fuel gas supply amount, based on the mixing ratio of inert gas determined by the determination unit 31. This can decrease the supply flow rate of the fuel gas so that the regulatable range of the fuel gas by the flow-rate regulation valve 13 can be increased.

When the fuel gas containing the inert gas is supplied, an accumulation rate of inert gas in an anode system including the fuel-gas supply channel 4 and the fuel-gas circulation channel 9 may increase. In this case, even when the degassing valve 20 is opened to discharge outside the fuel gas, it may be difficult to decrease the mixing ratio of inert gas to maintain a hydrogen concentration in the fuel gas at a predetermined concentration. In contrast, according to this embodiment, the upper limit value of the generated electric current of the fuel cell 2 is decreased and the fuel gas supply amount is decreased, based on the mixing ratio of inert gas determined by the determination unit 31. The decrease in the fuel gas supply amount can decrease the accumulation rate of inert gas to be accumulated in the anode system, and degassing through the degassing channel 10 can maintain the hydrogen concentration in the fuel gas at a predetermined concentration.

In the aforementioned embodiment, an example in which the operation control unit 32 decreases the upper limit value of the generated electric current of the fuel cell 2 and decreases the fuel supply amount, based on the mixing ratio of inert gas, was described. However, this embodiment is not limited to this example. For example, the operation control unit 32 may regulate a time interval t1 (see Fig. 2) in which the degassing valve 20 is closed, based on the mixing ratio of inert gas determined by the determination unit 31.

For example, when the determination unit 31 determines that the mixing ratio of inert gas is large, the operation control unit 32 may decrease the time interval t1 in which the degassing valve 20 is closed. This can increase a time ratio in which the degassing valve 20 is open, so that the fuel gas can be efficiently released outside from the degassing channel 10. This can decrease the mixing ratio of inert gas in the fuel gas. Thereafter, when the mixing ratio of inert gas in the fuel gas decreases, the time interval t1 in which the degassing valve 20 is closed may be restored.

In addition, for example, the operation control unit 32 may regulate a time interval t2 in which the degassing valve 20 is open, for example, may increase the time interval t2 in which the degassing valve 20 is open, based on the mixing ratio of inert gas determined by the determination unit 31. This can increase a time ratio in which the degassing valve 20 is open, so that the fuel gas can be efficiently released outside from the degassing channel 10. This can decrease the mixing ratio of inert gas in the fuel gas. Thereafter, when the mixing ratio of inert gas in the fuel gas decreases, the time interval t2 in which the degassing valve 20 is open may be restored.

(Second Embodiment)

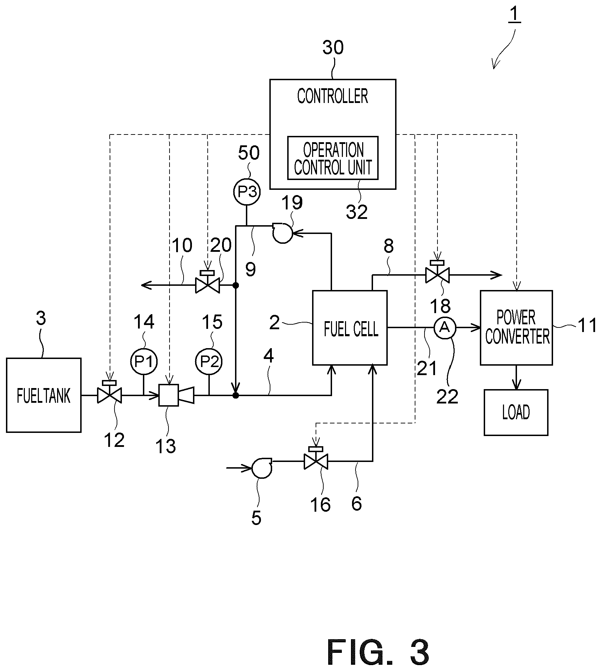

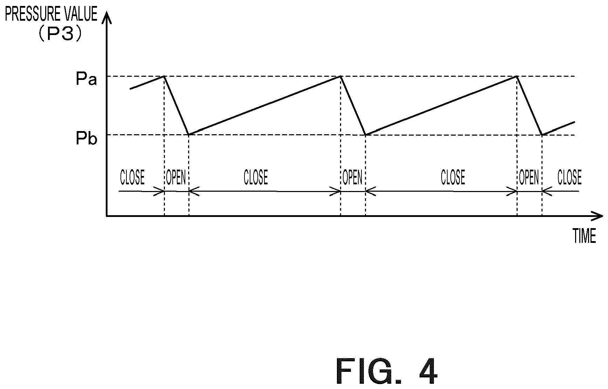

Next, a fuel cell system according to a second embodiment is described with reference to Figs. 3 and 4.

The second embodiment shown in Figs. 3 and 4 differs from the first embodiment shown in Figs. 1 and 2 mainly in that a time interval in which the degassing valve is closed, or a time interval in which the degassing valve is open is regulated, based on a pressure value measured by a third pressure gauge, and is substantially the same as the first embodiment in other configurations. In Figs. 3 and 4, the same parts as in the first embodiment shown in Figs. 1 and 2 are indicated by the same symbols and detailed description thereof is omitted.

As shown in Fig. 3, a fuel cell system 1 in this embodiment comprises a third pressure gauge 50. The fuel cell system 1 according to this embodiment may not comprise the aforementioned determination unit 31.

The third pressure gauge 50 is configured to measure a pressure value of a fuel gas in a fuel-gas circulation channel 9. The third pressure gauge 50 is provided downstream of a circulation blower 19 in the fuel-gas circulation channel 9. The third pressure gauge 50 may be provided between the circulation blower 19 and a branch point to a degassing channel 10. A pressure value measured by the third pressure gauge 50 is transmitted to a controller 30. The third pressure gauge 50 may be provided upstream of the circulation blower 19.

An operation control unit 32 in this embodiment regulates a time interval t1 (see Fig. 2) in which a degassing valve 20 is closed, based on a pressure value P3 measured by the third pressure gage 50. In addition, the operation control unit 32 may regulate a time interval t2 (see Fig. 2) in which the degassing valve 20 is open, based on the pressure value P3 measured by the third pressure gauge 50.

For example, the operation control unit 32 may regulate the time interval t1 in which the degassing valve 20 is closed, based on an increase rate of the pressure value P3 measured by the third pressure gauge 50. When the increase rate of the pressure value P3 is greater than a predetermined threshold value, the time interval t1 in which the degassing valve 20 is closed may be decreased.

In addition, the operation control unit 32 may regulate the time interval t2 in which the degassing valve 20 is open, when the increase rate of the pressure value P3 measured by the third pressure gauge 50 is greater than the predetermined threshold value. When the increase rate of the pressure value P3 is greater than the predetermined threshold value, the time interval t2 in which the degassing valve 20 is open may be increased.

When the fuel gas contains no inert gas, a nitrogen gas in the oxidant gas moves from a cathode system including an oxidant-gas supply channel 6 to an anode system. This may increase a mixing ratio of inert gas in the fuel gas. An increase rate of the mixing ratio of inert gas in this case is relatively slow. On the other hand, when the fuel gas contains the inert gas, the fuel gas containing the inert gas is supplied, in addition to the movement of the nitrogen gas from the cathode system to the anode system. Thus, the increase rate of the mixing ratio of inert gas in the fuel gas is relatively quick in the anode system. In this case, since the increase rate of the pressure value P3 measured by the third pressure gauge 50 increases, the mixing ratio of inert gas contained in the fuel gas increases. Monitoring of the increase rate of the pressure value P3 measured by the third pressure gauge 50 is effective in determining the mixing ratio of inert gas.

Namely, according to this embodiment, an operation condition of the fuel cell system 1 is changed based on the pressure value P3 measured by the third pressure gauge 50 provided on the fuel-gas circulation channel 9. Thus, even when the mixing ratio of inert gas in the fuel gas is large, the fuel cell system can be suitably operated based thereon. This allows the operation to be continued even when the fuel gas contains the inert gas.

In addition, according to this embodiment, the time interval t1 in which the degassing valve 20 is closed is regulated based on the increase rate of the pressure value P3 measured by the third pressure gauge 50. The use of increase rate of the pressure value P3 allows the mixing ratio of inert gas contained in the oxidant gas to be determined, separately from the nitrogen gas which has been moved from the cathode system to the anode system. Thus, degassing by the degassing valve 20 can effectively decrease the mixing ratio of inert gas contained in the fuel gas. This allows the operation to be continued even when the fuel gas contains the inert gas.

In addition, according to this embodiment, the time interval t2 in which the degassing valve 20 is open is regulated based on the increase rate of the pressure value P3 measured by the third pressure gauge 50. The use of increase rate of the pressure value P3 allows the mixing ratio of inert gas contained in the oxidant gas to be determined, separately from the nitrogen gas which has been moved from the cathode system to the anode system. Thus, degassing by the degassing valve 20 can effectively decrease the mixing ratio of inert gas contained in the fuel gas. This allows the operation to be continued even when the fuel gas contains the inert gas.

In the aforementioned embodiment, an example in which the time interval t1 in which the degassing valve 20 is closed, and the time interval t2 in which the degassing valve 20 is open are regulated, based on the increase rate of the pressure value P3 of the fuel gas in the fuel-gas circulation channel 9, was described. However, this embodiment is not limited to this example. The operation control unit 32 may open/close the degassing valve 20, based on the pressure value P3 of the fuel gas in the fuel-gas circulation channel 9. For example, as shown in Fig. 4, when the pressure value P3 measured by the third pressure gauge 50 reaches a desired upper limit value Pa, the degassing valve 20 is opened. This allows the fuel gas with a high mixing ratio of inert gas to be discharged outside from the degassing channel 10. The fuel-gas circulation channel 9 is supplied with a fuel gas supplied from the fuel tank 3, so that the mixing ratio of inert gas in the fuel gas present in the fuel-gas circulation channel 9 can be decreased. The decrease in mixing ratio of inert gas results in decrease in pressure loss of the fuel gas and decrease in pressure value P3. When the pressure value P3 reaches a desired lower limit value Pb, the operation control unit 32 may close the degassing valve 20. This can prevent the fuel gas with low mixing ratio of inert gas from being discharged outside from the degassing channel 10. Since the pressure value P3 can be regulated between the upper limit value Pa and the lower limit value Pb, the fuel cell system 1 can be suitably operated continuously.

(Third Embodiment)

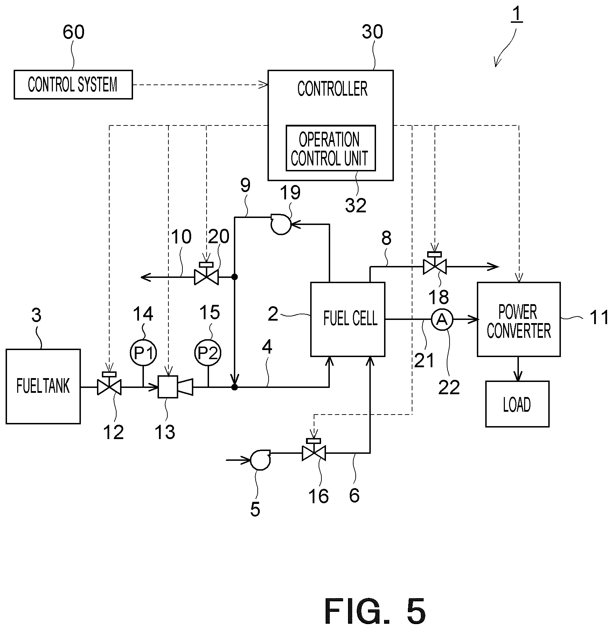

Next, a fuel cell system in a third embodiment is described with reference to Fig. 5.

The third embodiment shown in Fig. 5 differs from the first embodiment shown in Figs. 1 and 2 mainly in that an operation condition of the fuel cell system is changed based on information stored in a superordinate control system of the fuel cell system, and is substantially the same as the first embodiment in other configurations. In Fig. 5, the same parts as in the first embodiment shown in Figs. 1 and 2 are indicated by the same symbols and detailed description thereof is omitted.

As shown in Fig. 5 a superordinate control system 60 is connected to a controller 30. The control system 60 issues various commands, such as operation commands, to the controller 30. The controller 30 controls operation of a fuel cell 2 based on these commands. The control system 60 stores various information, and the controller 30 acquires from the control system 60 information necessary to control the operation of the fuel cell 2. The fuel cell system 1 according to this embodiment may not comprise the aforementioned determination unit 31.

An operation control unit 32 according to this embodiment changes an operation condition of the fuel cell system 1, based on the information stored in the control system 60. The information stored in the control system 60 includes a purge end timing of the aforementioned purge process which was performed when the fuel tank 3 is replenished with the fuel. The controller 30 may acquire the purge end timing, and the operation control unit 32 may change the operation condition of the fuel cell system 1 based on the purge end timing. For example, until a predetermined elapsed period of time has passed from the purge end timing, operation control unit 32 may determine that a mixing ratio of inert gas is large, and may change the operation condition of the fuel cell system 1. The elapsed period of time may be optionally regulated. For example, the elapsed period of time may be either a period of time in which electric power generation of the fuel cell 2 continues, or a period of time until an amount of generated electric power of the fuel cell 2 reaches a predetermined amount of electric power. For example, the elapsed period of time may be optionally regulated based on a type of gas used in the purge process, or may be optionally regulated based on the number of substitutions by the purge gas.

In this case, until the aforementioned predetermined elapsed period of time has passed from the purge end timing, the operation control unit 32 may decrease an upper limit value of the generated electric current of the fuel cell 2, and may decrease a fuel gas supply amount. This decreases an accumulation rate of inert gas to be accumulated in the fuel electrode of the fuel cell 2, to thereby prevent performance degradation of the fuel cell. A decrease rate of the upper limit value of the generated electric current and a decrease rate of the fuel gas supply amount may be optionally regulated. For example, the decrease rate of the upper limit value of the generated electric current and a decrease rate of the fuel gas supply amount may be optionally regulated based on a type of gas used in the purge process or the number of substitutions by the purge gas. After the aforementioned elapsed period of time has passed from the purge end timing, the operation control unit 31 may restore the upper limit value of the generated electric current and the fuel gas supply amount.

Alternatively, until the aforementioned elapsed period of time has passed from the purge end timing, the operation control unit 32 may decrease a time interval t1 (see Fig. 2) in which a degassing valve 20 is closed. This can increase a time ratio in which the degassing valve 20 is open, so that fuel gas can be efficiently released outside from a degassing channel 10. Thus, a mixing ratio of inert gas in the fuel gas can be decreased. Further, until the aforementioned elapsed period of time has passed from the purge end timing, the operation control unit 32 may increase a time interval t2 (see Fig 2) in which the degassing valve 20 is open. After the aforementioned elapsed period of time has passed from the purge end timing, the operation control unit 32 may restore the time interval t1 in which the degassing valve 20 is closed, and the time interval t2 in which the degassing valve 20 is open.

Namely, according to this embodiment, the operation of the fuel cell system 1 is controlled based on the information stored in the superordinate control system 60 of the fuel cell system 1. Thus, even when the mixing ratio of inert gas in the fuel gas is large, the fuel cell system can be suitably operated based thereon. This allows the operation to be continued even when the fuel gas contains the inert gas.

In the aforementioned embodiment, an example in which the fuel cell system 1 does not comprise the determination unit 31 was described. However, this embodiment is not limited to this example. For example, the fuel cell system 1 may comprise the determination unit 31.

The fuel cell system 1 generally monitors a difference between a fuel gas supply amount to the fuel electrode and a fuel gas consumption amount calculated from the generated electric current of the fuel cell 2, in order to detect leakage of the fuel gas. Since a molecular weight of the inert gas is greater than a molecular weight of the fuel gas, the fuel gas supply amount to the fuel electrode is excessively detected because of the presence of inert gas. In this case, the difference between the fuel gas supply amount and the fuel gas consumption ratio is likely to be overestimated, whereby leakage of the fuel gas is likely to be falsely detected.

In order to address this false detection, until the aforementioned period of time has passed from the purge end timing, the determination unit 31 may determine that a mixing ratio of inert gas has increased when the difference between the fuel gas supply amount and the fuel gas consumption amount is greater than a first threshold value. The operation control unit 32 may change the operation condition of the fuel cell system 1 similarly to the above, based on the mixing ratio of inert gas determined by the determination unit 31. When determining that the mixing ratio of inert gas in the fuel gas is not large, the operation control unit 32 may restore the operation condition of the fuel cell system 1. After the predetermined period of time has passed, the determination unit 31 may determine that the mixing ratio of inert gas has increased when the difference between the fuel gas supply amount and the fuel gas consumption amount is greater than a second threshold value. In this case, the operation control unit 32 may change the operation condition of the fuel cell system 1 similarly. The second threshold value may be smaller than the first threshold value. When determining that the mixing ratio of inert gas in the fuel gas is not large after the aforementioned period of time has passed, the operation control unit 32 may restore the operation condition of the fuel cell system 1. In this manner, the operation can be continued by increasing the first threshold value used by the determination unit 31 until the aforementioned period of time has passed from the purge end timing.

Another example in which the fuel cell system 1 comprises the determination unit 31 is described. In this case, the information stored in the control system 60 includes a concentration of the inert gas in the fuel gas. The controller 30 may acquire the concentration of the inert gas, and the determination unit 31 may determine whether the mixing ratio of inert gas in the fuel gas to be supplied to the fuel cell 2 is large, based on the concentration of the inert gas. For example, when the concentration of the inert gas stored in the control system 60 is greater than a predetermined threshold value, the determination unit 31 may determine that the mixing ratio of inert gas has increased. The operation control unit 32 may change the operation condition of the fuel cell system 1, based on the mixing ratio of inert gas determined by the determination unit 31. When the determination unit 31 determines that the concentration of the inert gas stored in the control system 60 is not greater than the predetermined threshold value, the operation control unit 32 may restore the operation condition of the fuel cell system 1.

According to the aforementioned embodiment, the operation can be continued even when the fuel gas contains the inert gas.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the sprit of the inventions. The accompanying claims and their equivalents are intended to cover such forms or modifications as would fail within the scope and spirit of the invention.

## Claims

1. A fuel cell system comprising:

   a fuel cell that is supplied with a fuel gas to generate electric power;
   a determination unit that determines a mixing ratio of inert gas in the fuel gas to be supplied to the fuel cell; and
   an operation control unit that changes an operation condition of the fuel cell system, based on the mixing ratio of inert gas determined by the determination unit.

2. The fuel cell system according to claim 1, wherein
   the determination unit determines the mixing ratio of inert gas, based on a fuel gas supply amount to the fuel cell and a fuel gas consumption amount in the fuel cell.

3. The fuel cell system according to claim 2, comprising:

   a flow-rate regulation valve that regulates a flow rate of the fuel gas to be supplied to the fuel cell;
   a first pressure gauge that measures a pressure value of the fuel gas flowing into the flow-rate regulation valve;
   a second pressure gauge that measures a pressure value of the fuel gas flowing out from the flow-rate regulation valve; and
   an ammeter that measures an electric current value of generated electric power outputted from the fuel cell;

wherein the determination unit calculates the fuel gas supply amount based on the pressure value measured by the first pressure gauge, the pressure value measured by the second pressure gauge, and an opening degree of the flow-rate regulation valve, and calculates the fuel gas consumption amount based on a generated electric current value measured by the ammeter.

4. The fuel cell system according to claim 2 or 3, wherein
the operation control unit regulates an upper limit value of a generated electric current of the fuel cell and regulates the fuel gas supply amount, based on the mixing ratio of inert gas determined by the determination unit.

5. The fuel cell system according to claim 1 or 2, comprising:

   a fuel-gas circulation channel that returns the fuel gas discharged from the fuel cell to the fuel cell;
   a degassing channel that discharges outside the fuel gas from the fuel-gas circulation channel; and
   a degassing valve provided on the degassing channel;
   wherein the operation control unit regulates a time interval in which the degassing valve is closed, or a time interval in which the degassing valve is open, based on the mixing ratio of inert gas determined by the determination unit.

6. A fuel cell system comprising:

   a fuel cell that is supplied with a fuel gas to generate electric power;
   a fuel-gas circulation channel that returns the fuel gas discharged from the fuel cell to the fuel cell;
   a third pressure gauge that measures a pressure value of the fuel gas in the fuel-gas circulation channel;
   a degassing channel that discharges outside the fuel gas from the fuel-gas circulation channel;
   a degassing valve provided on the degassing channel; and
   an operation control unit that changes an operation condition of the fuel cell system, based on the pressure value measured by the third pressure gauge.

7. The fuel cell system according to claim 6, wherein
the operation control unit regulates a time interval in which the degassing valve is closed, or a time interval in which the degassing valve is open, based on an increase rate of the pressure value measured by the third pressure gauge.

8. The fuel cell system according to claim 7, wherein
the operation control unit regulates the interval in which the degassing valve is closed, or the time interval in which the degassing valve is open, based on the pressure value measured by the third pressure gauge.

9. A fuel cell system comprising:

   a fuel cell that is supplied with a fuel gas to generate electric power; and
   an operation control unit that changes an operation condition of the fuel cell system, based on information stored in a superordinate control system of the fuel cell system.

10. The fuel cell system according to claim 9, wherein

    the information of the control system includes a purge end timing of a purge process performed when a fuel tank is replenished with fuel; and
    the operation control unit changes the operation condition of the fuel cell system, until a predetermined period of time has passed from the purge end timing.

11. The fuel cell system according to claim 9, further comprising a determination unit that determines a mixing ratio of inert gas in the fuel gas to be supplied to the fuel cell, based on the information of the control system,
    wherein the operation control unit changes the operation condition of the fuel cell system, based on the mixing ratio of inert gas determined by the determination unit.

12. The fuel cell system according to claim 11, wherein:

    the information of the control system includes a purge end timing of a purge process performed when a fuel tank is replenished with fuel;

until a predetermined elapsed period of time has passed from the purge end timing, the determination unit determines that the mixing ratio of inert gas has increased when a difference between a fuel gas supply amount to the fuel cell and a fuel gas consumption amount in the fuel cell is greater than a first threshold value;

after the elapsed period of time has passed, the determination unit determines that the mixing ratio of inert gas has increased when a difference between the fuel gas supply amount and the fuel gas consumption amount is greater than a second threshold value; and

the second threshold value is smaller than the first threshold value.

13. The fuel cell system according to claim 11, wherein

the information of the control system includes a concentration of an inert gas in the fuel gas, and
the determination unit determines the mixing ratio of inert gas in the fuel gas to be supplied to the fuel cell, based on the concentration of the inert gas.

FIG. 1

FIG. 2

FIG. 3

FIG. 4

FIG. 5